# EUROPEAN PATENT SPECIFICATION

(11) **EP 4 029 722 B1**
(45) Date of publication and mention of the grant of the patent: **09.08.2023**
(21) Application number: 22150130.7
(22) Date of filing: 04.01.2022
(51) Int. Cl.: B60L 53/18, H01R 31/06

(54) **A CHARGER ASSEMBLY**
LADEGERÄTANORDNUNG
ENSEMBLE CHARGEUR

(30) Priority: 15.01.2021 NO 20210054
(43) Date of publication of application: 20.07.2022
(73) Proprietor: Defa AS, 3540 Nesbyen (NO)
(72) Inventor: Kopperud, Agnar, 3540 Nesbyen (NO)
(74) Representative: Zacco Norway AS

(56) References cited:
- WO-A2-2012/078921
- CN-A- 112 060 948
- US-A1- 2014 179 164

## Description

### Technical field of the invention

The invention concerns the field of electric vehicles, and in particular a charging cable as set out by the preamble of claim 1, and a charger assembly for an electric vehicle as set out by the preamble of claim 8.

### Background of the invention

Batteries for powering electric vehicles (EV), such as electric cars, require charging from time to time. Charging is facilitated by electrically connecting the on-board EV battery or batteries to an external power generator or power source, for example an AC power grid. The connection may be via a cable (conductive charging) or by induction (wireless charging).

A number of conductive charging modes exist, where Mode 2 and Mode 3 are the more common ones used for charging electric cars.

Mode 3 involves a charging control unit which is fixedly mounted (on for example a wall or post) and permanently connected to an AC power grid. The charging control unit comprises necessary control and communications systems for charging the EV battery. To charge the battery, a user (e.g. a motorist) connects a designated cable between the EV and the charging unit. The cable is fitted with connectors (plugs) that are compatible with the EV and the charging unit. One common connector type is referred to as a "Type 2 connector". A Mode 3 charging cable therefore typically comprises a Type 2 connector at each end, and the cable is normally stowed in the EV when not in use. Mode 3 is commonly used in commercial roadside charging stations.

Mode 2 involves a portable system which the motorist typically carries in the EV and uses when a Mode 3 system is unavailable. The Mode 2 system comprises a portable charging control unit with two permanently connected cables. The first cable is intended for connection to a conventional household socket (and to an AC power grid), and the second cable is intended for connection to a designated socket in the EV. The first cable, which is often referred to as the "primary cable", therefore comprises a conventional household connector, such as a Schuko^{®} plug. The second cable, which is often referred to as the "secondary cable", comprises a connector compatible with the EV socket, for example a Type 2 connector.

An EV must therefore normally carry both a Mode 3 charging cable and a Mode 2 system. The length of a Mode 3 charging cable is typically between four and seven metres, and the total length of a Mode 2 system (primary and secondary cables, and charging control unit) is also normally around seven metres. The cables are thick and bulky, and occupy valuable stowage space in the EV. The present invention aims at improving cable stowage and reducing the number of charging cables that need to be carried on board the EV.

The prior art includes EP2990255A1, which describes a vehicle charging device having a grid plug connected to an external power source for providing power for vehicle charging, a grid cable connected to the grid plug, a charging circuit interrupt device (CCID) connected to the grid cable and including a relay circuit for a vehicle charging control, a coupler connected to the vehicle and a coupler cable connecting the coupler and the CCID. The grid plug includes first and second terminals electrically connected to the external power source and first and second temperature sensors disposed at positions separated by a predetermined distance from the first and second terminals, and the first and second temperature sensors are commonly connected to a ground line earthed.

### Summary of the invention

The invention is set forth and characterized in the main claim, while the dependent claims describe other characteristics of the invention.

It is thus provided a charging cable, comprising a first connector configured for connection to an electric vehicle, and a second connector, wherein the first and second connectors are interconnectable to form a rigid support element for the charging cable, characterized in that the first and second connectors comprise respective cable control members that form a support region for at least a portion of the charging cable. In one embodiment, the cable control members are selectively extendable and retractable.

The charging cable further comprises an interface plug for connection between the first and second connectors, whereby the interface plug and the first and second connectors are interconnectable to form a rigid support element for the charging cable.

In one embodiment, the first and second connectors comprise respective cable support regions having an arched surface of a radius. The charging cable may further comprise a plurality of alignment indicators that serve as an aid when coiling the cable and ensure that the cable is coiled to the desired dimension.

In one embodiment, the charging cable is a Mode 3 charging cable and the first and second connectors are Type 2 connectors. In one embodiment, the first connector and the second connector are female and male connectors, respectively.

It is also provided a charger assembly for charging an electric vehicle (EV), comprising a portable charging control unit having a first cable configured for connection to a power grid or other power source, and a socket configured for connection to a second cable; characterized in that the second cable is a charging cable according to the invention, and the second cable is configured for releasable connection to the socket and for charging an EV. In one embodiment, the first cable is releasably connectable to the charging control unit via a plug-and-socket interface. In one embodiment, the portable charging control unit comprises first and second end portions that are shaped and dimensioned for supporting at least a portion of the second cable when the cable is in a coiled configuration.

### Brief description of the drawings

These and other characteristics of the invention will become clear from the following description of embodiments of the invention, given as non-restrictive examples, with reference to the attached schematic drawings, wherein:
Figure 1 is a perspective view of an embodiment of the charging control unit and the first cable;
Figure 2 is a close-up view of region A in figure 1, from a different perspective, illustrating a socket;
Figure 3 is a perspective view of an embodiment of the second cable arranged in a storage configuration;
Figure 4 is a perspective view of the invented charger assembly with the first cable connected to a power outlet;
Figure 5 is plan view of components of the charger assembly, i.e. the first and second cables and the charging control units;
Figure 6 is a plan view of an embodiment of the second cable arranged in a storage configuration;
Figures 7 and 8 are different views of the second cable in the configuration as shown in figure 6;
Figure 9 is a plan view of an embodiment of the first and second connectors of the second cable;
Figure 10 is a plan view of the components shown in figure 5, arranged as one portable unit;
Figures 11a and 11b are perspective views of an embodiment of the charger assembly wherein the charging control unit is configured for assembly onto a support member;
Figures 12a and 12b correspond to figures 11a and 11b, and shows the charging control unit assembled on a support member;
Figure 13 is a side view of an embodiment of a portion of the second cable, illustrating an embodiment of an alignment indicator;
Figure 14 is a side view of the first and second connectors in a disconnected state;
Figure 15 is a side view of an embodiment of the second cable arranged in a storage configuration, illustrating rotatable cable control tabs;
Figure 16 is a side view of an embodiment of a connector having cable control tabs fixed in an extended position;
Figures 17a and 17b illustrate two embodiments of the cable control tabs;
Figure 18 is a side view of an embodiment of the invention comprising a connector interface plug, the first and second connectors shown in a disconnected state; and
Figure 19 corresponds to figure 18, and shows the first and second connectors in a connected state via the connector interface plug.

### Detailed description of embodiments of the invention

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

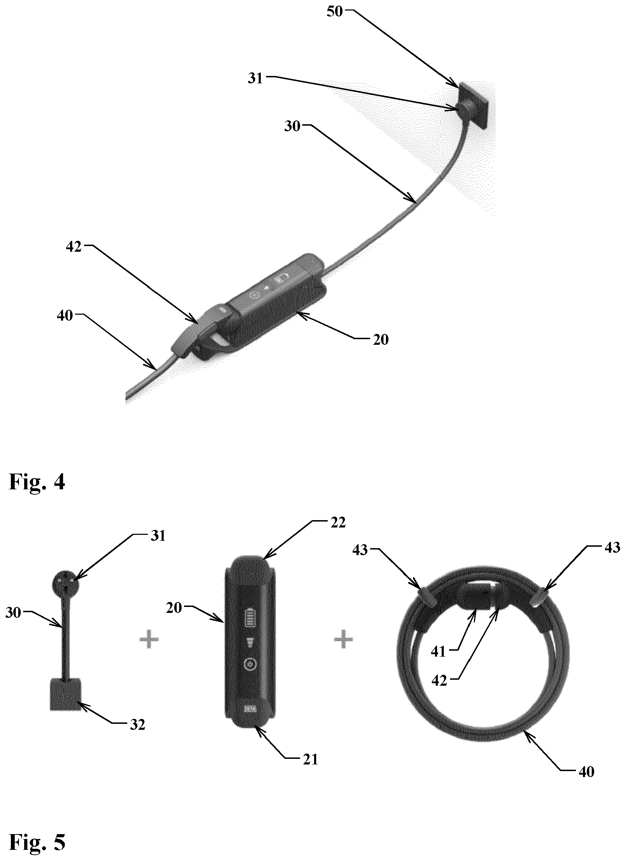

Referring initially to figure 5, the invented charger assembly comprises a charging control unit 20, a primary, or first, cable 30, and a second cable 40. The second cable 40 comprises a first (female) connector 41 and a second (male) connector 42.

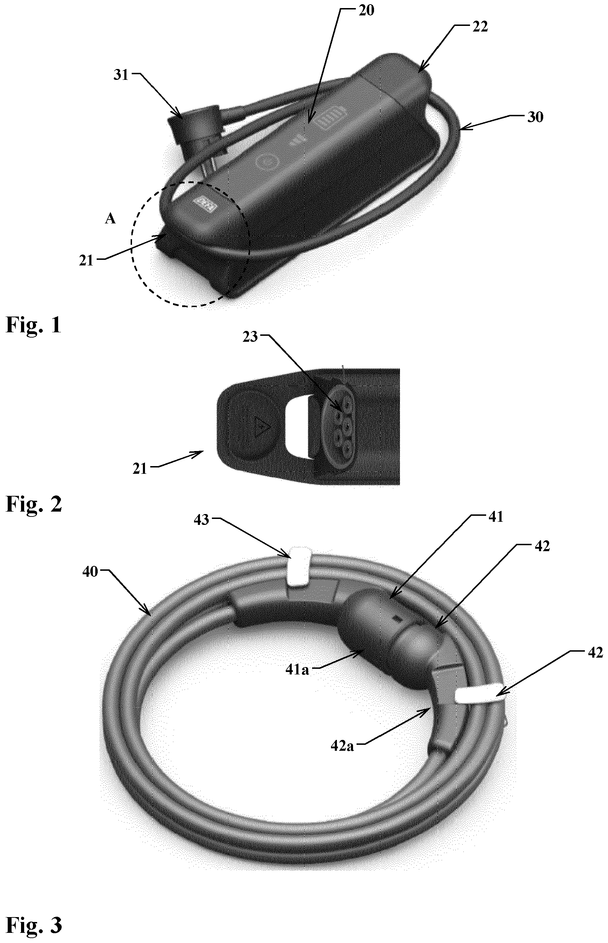

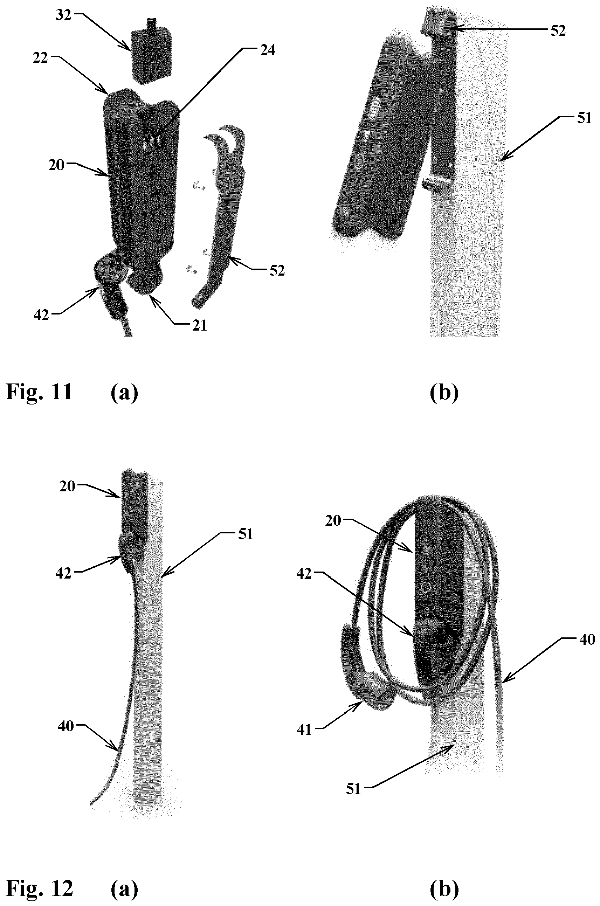

The second (male) connector 42 is configured for releasable connection to a (female) socket 23 arranged at a first end 21 of the charging control unit 20 (see figure 2). In the illustrated embodiment, the second connector is a male Type 2 connector, and the first connector is a female Type 2 connector (see e.g. figure 11b) for connection to a corresponding (male) socket (not shown) in e.g. an EV. Therefore, in the illustrated embodiment, the second cable 40 is a Mode 3 charging cable.

The first cable 30 comprises a connector 31 for connection to a power source or power grid, for example via a power outlet socket 50 (see figure 4). The connector 31 may be a conventional household connector, such as a Schuko^{®} plug. The first cable 30 is connected to the charging control unit 20 at a second end 22. The first cable may be permanently connected to the charging control unit 20 or may be releasably connected via a control unit connector (plug) 32 and a corresponding socket 24 (see figure 11a).

Carrying the invented charger assembly (charging control unit 20, primary cable 30, and Mode 3 charging cable 40) on board the EV will therefore accommodate any charging scenario. The invented charger assembly replaces the Mode 2 system and therefore removes the need for carrying a separate Mode 2 system in the EV. In a Mode 3 charging scenario, the Mode 3 charging cable 40 is used for connecting the EV to charging control unit at the roadside charging station.

When not in use, the Mode 3 cable 40 may be arranged for stowing in a configuration as illustrated in figures 3, and 5-8 and 10. The female and male connectors 41, 42 are interconnected to form a rigid connection which serves as a support for the second cable 40. The respective handle portions 41a, 42a comprise cable control members 43 (at least one on each side of each handle portion). The control members 43 may be movable between extended and retracted position. In the figures, the control members 43 comprise cable control tabs 43 that are rotatable between a retracted position (along the handle) and an extended position as shown in the figures. In the extended position, the cable control members (tabs) 43 form sideways support elements for the cable and thus serve to hold the cable in alignment with the handle portions.

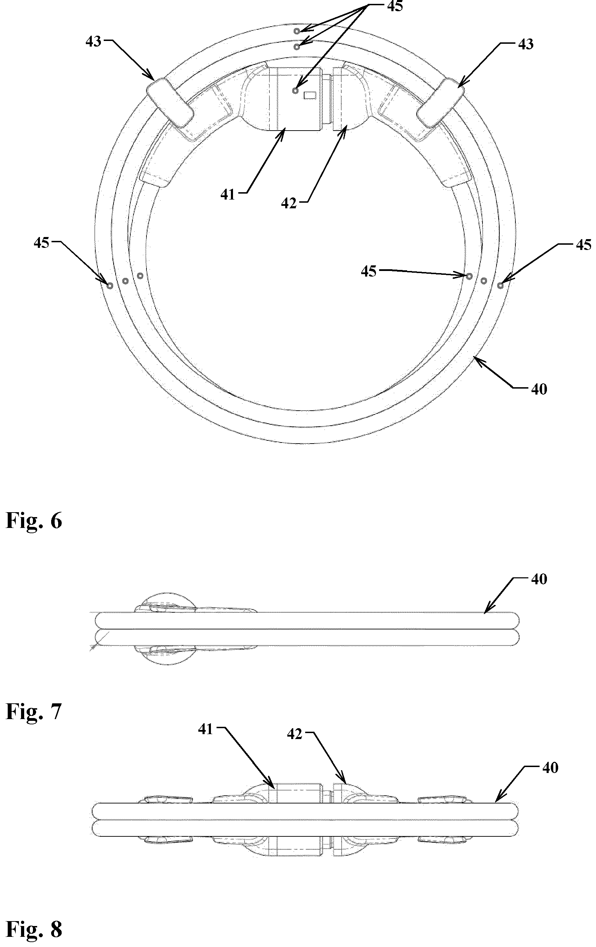

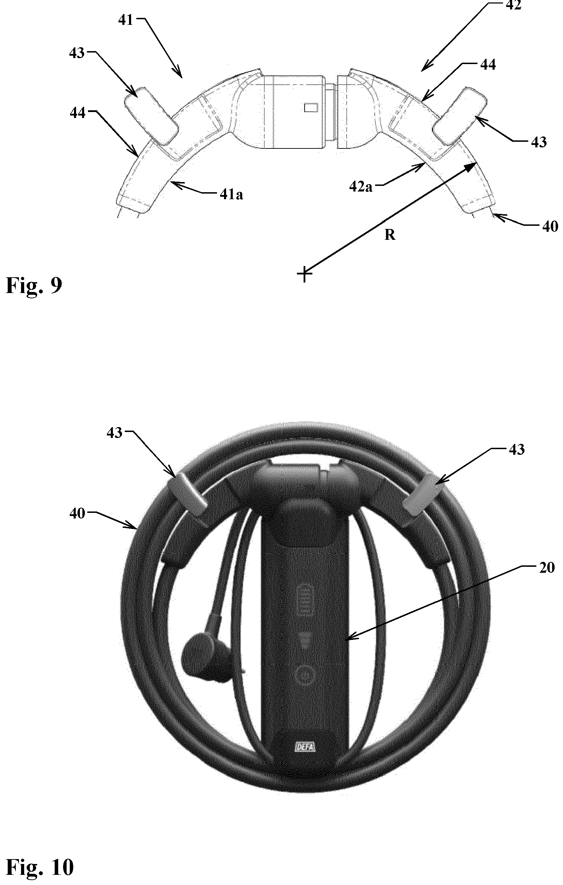

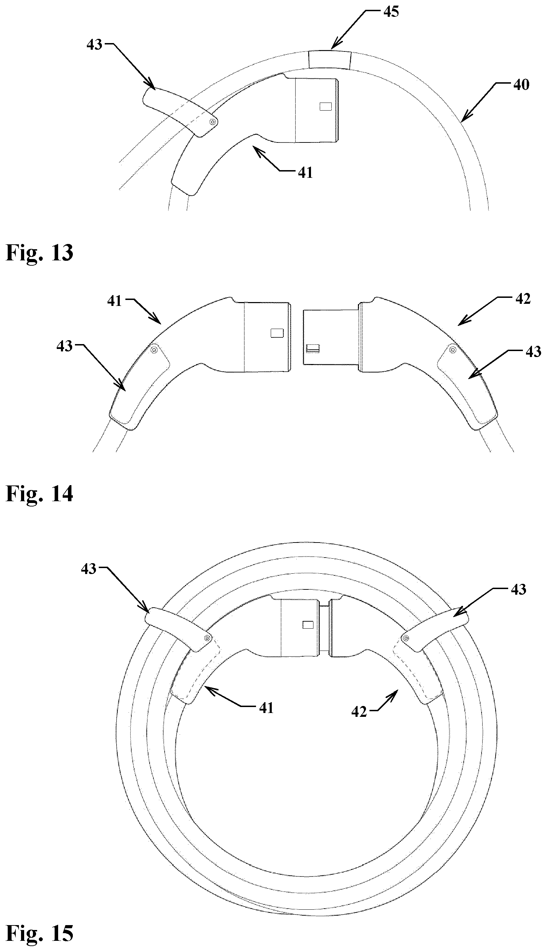

The female and male connectors 41, 42, particularly in the region of the handle portions 41a, 42a, comprise respective cable support surfaces 44 that are arched with a desired radius of curvature R (see figure 10). The support surfaces 44 therefore determine the dimension of the coiled cable 40, as illustrated e.g. in figure 6. The radius of curvature R may for example be on the order of 300 to 400 mm, but the invention shall not be limited to this dimension. In the embodiment shown in figure 6, the cable 40 comprises a number of alignment indicators 45. These may be dots, lines, numbers, or letters, and serve as an aid when coiling the cable and ensures that the cable is coiled to the desired dimension. Another example of such alignment indicator 45 is illustrated in figure 13, in the form of a band around a portion of the cable 40.

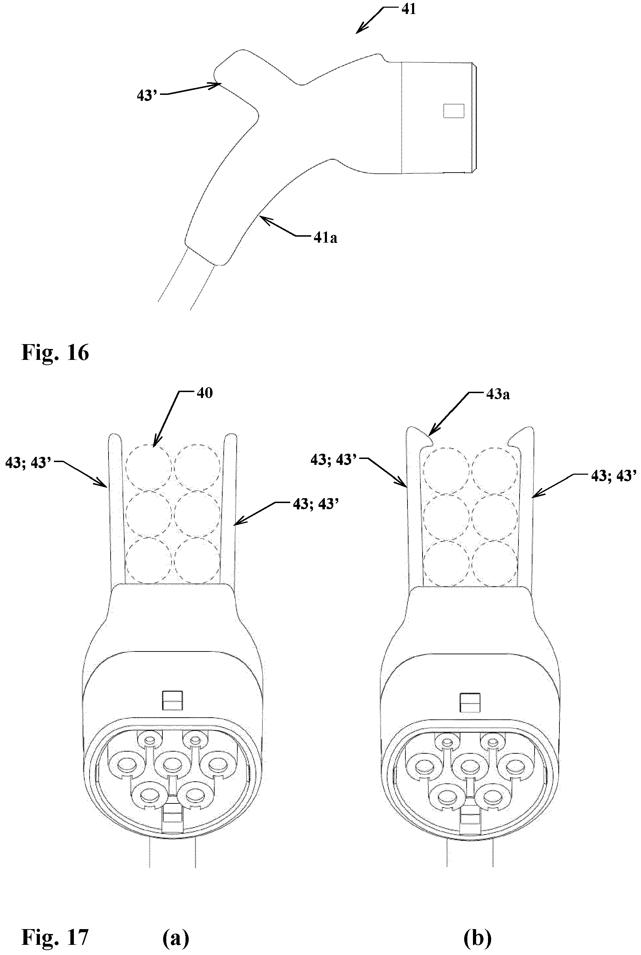

Figures 13, 14, and 15 also illustrate the rotatable cable control members 43 in extended and retracted positions. Figure 16 illustrated an embodiment in which the cable control members 43' are fixed in an extended position and integrated in the first connector handle portion 41a. A similar configuration may incorporated in the second connector handle portion.

Figures 17a and 17b show two embodiments of the cable control member, figure 17b illustrating hook portions 43a at the control member 43; 43' free end.

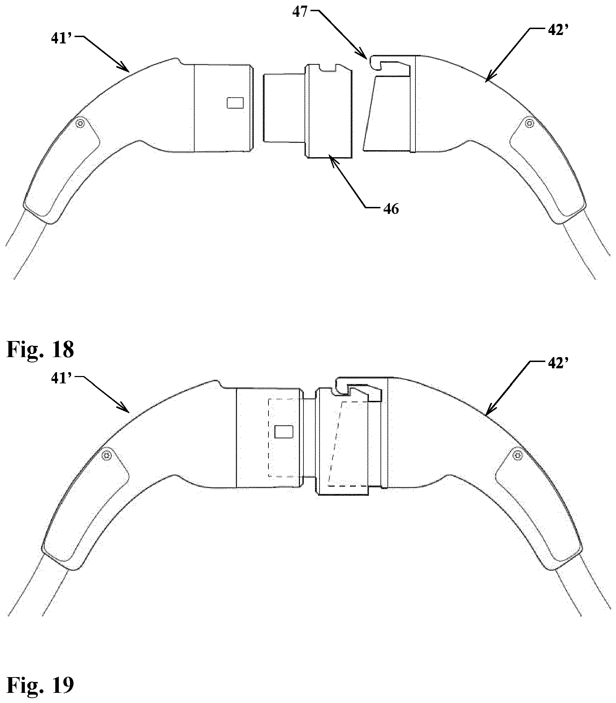

Figures 18 and 19 illustrate an interface plug 46 that may be connected between the first and second connectors in order to mate these connectors in the event that they are not compatible. The interface plug 46 may be locked into one of the connector, for example by a latch 47, and combined assembly of connectors and interface plug will form a rigid structure for supporting the coiled cable, as described above.

Referring again to figure 1, the charging control unit 20 comprises end portions 21, 22, that are shaped to accommodate respective portions of the coiled cable 40. The cable may thus be coiled around the charging control unit 20, which is held in place inside the coiled cable. This is illustrated in figure 10 and shows how the complete charger assembly may be combined into one portable unit. This unit may conveniently be stowed in the EV luggage compartment, and it will be understood that this unit demands much lesser space than the present combination of Mode 3 cable and Mode 2 system.

The invented charger assembly may also be configured for temporary and removable connection to a stationary support 51, such as a post or wall. This is illustrated in figures 11a,b and 12a,b. A bracket 52 is fixed to a wall or post 51 and is configured for releasably receiving and supporting the charging control unit 20 via suitable clips compatible with the charging control unit's first and second ends 21, 22. The charger assembly may thus be used for e.g. charging at home, and may easily be removed from the bracket and placed in the EV when required.

Although the invention has been described with reference to electric cars, it should be understood that the invention is applicable for any electric vehicle or vessel.

Although the invention has been described with reference to conductive charging, it should be understood that it is also applicable to wireless charging, in which case the first connector 41 is replaced by an inductive charging device (not shown).

## Claims

1. A charging cable (40), comprising a first connector (41) configured for connection to an electric vehicle (EV), and a second connector (42), wherein the first and second connectors (41, 42) are interconnectable to form a rigid support element for the charging cable (40), **characterized in that** the first and second connectors (41, 42) comprise respective cable control members (43; 43') that form a support region for at least a portion of the charging cable (40).

2. The charging cable of claim 1, wherein the cable control members (43) are selectively extendable and retractable.

3. The charging cable of any one of claims 1-2, further comprising an interface plug (46) for connection between the first and second connectors (41, 42), whereby the interface plug (46) and the first and second connectors (41, 42) are interconnectable to form a rigid support element for the charging cable.

4. The charging cable of any one of claims 1-3, wherein the first and second connectors (41, 42) comprise respective cable support regions (44) having an arched surface of a radius (R).

5. The charging cable of any one of claims 1-4, further comprising a plurality of alignment indicators (45) that serve as an aid when coiling the cable and ensure that the cable is coiled to the desired dimension.

6. The charging cable of any one of claims 1-5, wherein the cable is a Mode 3 charging cable and the first and second connectors (41, 42) are Type 2 connectors.

7. The charging cable of any one of claims 1-6, wherein the first connector (41) and the second connector (42) are female and male connectors, respectively.

8. The charging cable of any one of claims 2-7, wherein the cable control members are arranged on respective connector handle portions (41a, 42a), at least one on each side of each handle portion.

9. The charging cable of claim 8, wherein the control members (43) comprise cable control tabs that are rotatable between a retracted position along the handle portion and an extended position, whereby the control members (43) when in the extended position form sideways support elements for the cable and thus serve to hold the cable in alignment with the handle portions.

10. The charging cable of claim 8, wherein the cable control members (43') are fixed in an extended position and integrated in the respective connector handle portion.

## Patentansprüche

1. Ladekabel (40), das einen ersten Verbinder (41), der zur Verbindung mit einem Elektrofahrzeug (EV) konfiguriert ist, und einen zweiten Verbinder (42) umfasst, wobei der erste und zweite Verbinder (41, 42) miteinander verbindbar sind, um ein starres Stützelement für das Ladekabel (40) zu bilden, **dadurch gekennzeichnet, dass** der erste und zweite Verbinder (41, 42) jeweilige Kabelsteuerelemente (43; 43') umfassen, die einen Stützbereich für mindestens einen Abschnitt des Ladekabels (40) bilden.

2. Ladekabel nach Anspruch 1, wobei die Kabelsteuerelemente (43) selektiv einziehbar und ausziehbar sind.

3. Ladekabel nach einem der Ansprüche 1-2, das ferner einen Schnittstellenstecker (46) zur Verbindung zwischen dem ersten und zweiten Verbinder (41, 42) umfasst, wobei der Schnittstellenstecker (46) und der erste und zweite Verbinder (41, 42) miteinander verbindbar sind, um ein starres Stützelement für das Ladekabel zu bilden.

4. Ladekabel nach einem der Ansprüche 1-3, wobei der erste und zweite Verbinder (41, 42) jeweilige Kabelstützbereiche (44) umfassen, die eine gebogene Fläche mit einem Radius (R) aufweisen.

5. Ladekabel nach einem der Ansprüche 1-4, das ferner eine Vielzahl von Ausrichtungsanzeigern (45) umfasst, die als Unterstützung beim Wickeln des Kabels dienen und sicherstellen, dass das Kabel in der richtigen Abmessung gewickelt wird.

6. Ladekabel nach einem der Ansprüche 1-5, wobei das Kabel ein Mode-3-Ladekabel ist und der erste und zweite Verbinder (41, 42) Typ-2-Verbinder sind.

7. Ladekabel nach einem der Ansprüche 1-6, wobei der erste Verbinder (41) und der zweite Verbinder (42) ein Buchsen- bzw. Steckverbinder sind.

8. Ladekabel nach einem der Ansprüche 2-7, wobei die Kabelsteuerelemente an jeweiligen Verbindergriffabschnitten (41a, 42a), mindestens einer auf jeder Seite des Griffabschnitts, angeordnet sind.

9. Ladekabel nach Anspruch 8, wobei die Steuerelemente (43) Kabelsteuerlaschen umfassen, die zwischen einer eingezogenen Position entlang des Griffabschnitts und einer ausgezogenen Position drehbar sind, wobei die Steuerelemente (43) in der ausgezogenen Position an der Seite Stützelemente für das Kabel bilden und somit dazu dienen, das Kabel in Ausrichtung mit den Griffabschnitten halten.

10. Ladekabel nach Anspruch 8, wobei die Kabelsteuerelemente (43') in einer ausgezogenen Position befestigt und in dem jeweiligen Verbindergriffabschnitt integriert sind.

## Revendications

1. Câble de charge (40), comprenant un premier connecteur (41) configuré pour être connecté à un véhicule électrique (EV), et un second connecteur (42), dans lequel les premier et second connecteurs (41, 42) sont interconnectables pour former un élément de support rigide pour le câble de charge (40), **caractérisé en ce que** les premier et second connecteurs (41, 42) comprennent des éléments de commande de câble respectifs (43 ; 43') qui forment une zone de support pour au moins une partie du câble de charge (40).

2. Câble de charge selon la revendication 1, dans lequel les éléments de commande de câble (43) sont sélectivement extensibles et rétractables.

3. Câble de charge selon l'une quelconque des revendications 1 à 2, comprenant en outre une prise d'interface (46) pour une connexion entre les premier et second connecteurs (41, 42), moyennant quoi la prise d'interface (46) et les premier et second connecteurs (41, 42) sont interconnectables pour former un élément de support rigide pour le câble de charge.

4. Câble de charge selon l'une quelconque des revendications 1 à 3, dans lequel les premier et second connecteurs (41, 42) comprennent des régions respectives de support de câble (44) ayant une surface arquée d'un rayon (R).

5. Câble de charge selon l'une quelconque des revendications 1 à 4, comprenant en outre une pluralité d'indicateurs d'alignement (45) qui servent d'aide lors de l'enroulement du câble et garantissent que le câble est enroulé à la dimension souhaitée.

6. Câble de charge selon l'une quelconque des revendications 1 à 5, dans lequel le câble est un câble de charge de mode 3 et les premier et second connecteurs (41, 42) sont des connecteurs de type 2.

7. Câble de charge selon l'une quelconque des revendications 1 à 6, dans lequel le premier connecteur (41) et le second connecteur (42) sont des connecteurs femelle et mâle, respectivement.

8. Câble de charge selon l'une quelconque des revendications 2 à 7, dans lequel les éléments de commande de câble sont agencés sur des parties de poignée de connecteur respectives (41a, 42a), au moins une de chaque côté de chaque partie de poignée.

9. Câble de charge selon la revendication 8, dans lequel les éléments de commande (43) comprennent des languettes de commande de câble qui peuvent être pivotées entre une position rétractée le long de la partie de poignée et une position déployée, moyennant quoi les éléments de commande (43) lorsqu'ils sont dans la position déployée forment latéralement des éléments de support pour le câble et servent ainsi à maintenir le câble en alignement avec les parties de poignée.

10. Câble de charge selon la revendication 8, dans lequel les éléments de commande de câble (43') sont fixés dans une position déployée et intégrés dans la partie de poignée de connecteur respective.
